# EUROPÄISCHE PATENTSCHRIFT

(11) **EP 1 610 196 B1**
(45) Veröffentlichungstag und Bekanntmachung des Hinweises auf die Patenterteilung: **13.07.2011**
(21) Anmeldenummer: 05103753.9
(22) Anmeldetag: 04.05.2005
(51) Int. Cl.: G05D 1/02, G01S 13/93

(54) **Verfahren und Vorrichtung zur Vorhersage des Straßenverlaufs für Kraftfahrzeuge**
Method and apparatus for predicting the course of a road
Méthode et dispositif pour prédire le tracé de la route pour une voiture

(30) Priorität: 25.06.2004 DE 102004030752
(43) Veröffentlichungstag der Anmeldung: 28.12.2005
(73) Patentinhaber: ROBERT BOSCH GMBH, 70442 Stuttgart (DE)
(72) Erfinder: Maass, Alexander, 71229 Leonberg (DE)

(56) Entgegenhaltungen:
- DE-A1- 10 218 924
- DE-A1- 19 944 542
- DE-A1- 19 953 790

## Beschreibung

Die vorliegende Erfindung betrifft ein Verfahren und eine Vorrichtung zur Kursprädiktion bei Kraftfahrzeugen, die ein Ortungssystem für vor dem Fahrzeug befindliche Objekte aufweisen, bei dem anhand gemessener Abstands- und Winkeldaten eine Funktion berechnet wird, die den Verlauf der Fahrbahn beschreibt, indem mehrere Standziele identifiziert und verfolgt werden, und einer statistischen Auswertung zugeführt werden, wobei ein Plausibilitätskriterium darin besteht, dass mindestens ein Parameter der Funktion, die diese Fahrbahnverläufe beschreibt, ein signifikantes Häufigkeitsmaximum bei dem Wert aufweist, der dem echten Fahrbahnverlauf entspricht. Zu Beginn der Auswertung wird die Häufigkeitsverteilung für alle Parameter auf einen vorbestimmten Häufigkeitswert gesetzt und je nach Position von Standzielen oder Fahrzeugen die Häufigkeitswerte der Parameter um einen vorbestimmten Zahlenwert vermindert oder erhöht.

### Stand der Technik

Aus der DE 102 18 924 A1 ist ein Verfahren und eine Vorrichtung zur Kursprädiktion bei Kraftfahrzeugen bekannt, die ein Ortungssystem für vor dem Fahrzeug befindliche Objekte aufweisen, bei dem anhand gemessener Abstands- und Winkeldaten für Standziele am Fahrbahnrand eine Funktion berechnet wird, die den Verlauf des Fahrbahnrandes beschreibt, wobei mehrere Standziele identifiziert und verfolgt werden, dass man für verschiedene Teilmengen der Menge der verfolgten Standziele, unter der Annahme, dass diese Standziele am Fahrbahnrand liegen, den Fahrbahnrandverlauf abschätzt und dass man anhand der Plausibilität der erhaltenen möglichen Fahrbahnrandverläufe zwischen Fahrbahnrandzielen und Störobjekten unterscheidet und den wahrscheinlichsten Fahrbahnrandverlauf anhand der Fahrbahnrandziele bestimmt.

Aus der DE 10218924 A1 ist ein Verfahren zur Kursprädiktion bei Kraftfahrzeugen bekannt, die ein Ortungssystem für vor dem Fahrzeug befindliche Objekte aufweisen, bei dem anhand gemessener Abstands- und Winkeldaten für Standziele am Fahrbahnrand eine Funktion berechnet wird, die den Verlauf des Fahrbahnrandes beschreibt, wobei mehrere Standziele identifiziert und verfolgt werden, daß man für verschiedene Teilmengen der Menge der verfolgten Standziele, unter der Annahme, daß diese Standziele am Fahrbahnrand liegen, den Fahrbahnrandverlauf abschätzt und daß man anhand der Plausibilität der erhaltenen möglichen Fahrbahnrandverläufe zwischen Fahrbahnrandzielen und Störobjekten unterscheidet und den wahrscheinlichsten Fahrbahnrandverlauf anhand der Fahrbahnrandziele bestimmt.

Aus der D E 19944542 A1 ist ein Verfahren zur fahrzeugseitigen Bestimmung des Verlaufs einer von einem Fahrzeug befahrenen Fahrstrecke bekannt, bei dem ein Vorausbereich des Fahrzeugs mittels einer radarstrahlungsbasierten Objekterfassungseinrichtung abgetastet wird, die eine oder mehrere Abtasteinheiten mit Abtastbereichen unterschiedlicher lateraler Flächenabdeckung zur Erfassung des Abstands dortiger Objekte vom Fahrzeug umfaßt. Erfindungsgemäß werden für jede Abtasteinheit aus den von ihr in einem oder mehreren aufeinanderfolgenden Messvorgängen erfassten Abständen von Objekten Objektpunkte von stehenden Objekten auf einem Abstandsstrahl gebildet, aus den-Objektpunkten Objektabstandsmengen gemäß eines vorgegebenen Abstandsmengenbildungskriteriums bestimmt, aus den Objektabstandsmengen gemäß einer vorgegebenen Streckenverlaufspunktbildungsvorschrift virtuelle Streckenverlaufspunkte bestimmt und dann der Streckenverlauf durch Anpassen einer Streckenverlaufskurve an die virtuellen Streckenverlaufspunkte bestimmt.

### Kern und Vorteile der Erfindung

Der Kern der vorliegenden Erfindung ist es, ein Verfahren und eine Vorrichtung anzugeben, mittels denen ein Verfahren gemäß dem Oberbegriff der unabhängigen Ansprüche durchführbar ist und die es erlauben, den realen Fahrbahnkrümmungsradius mit höherer Sicherheit zu ermitteln. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhaft ist, dass anhand gemessener Abstands- und Winkeldaten vorausfahrende Fahrzeuge erkannt werden und die Häufigkeitswerte der Parameter um einen vorbestimmten Wert erhöht werden, deren Funktion einen Fahrbahnverlauf beschreiben, auf dem ein vorherfahrendes Fahrzeug erkannt wurde.

Weiterhin ist es vorteilhaft, dass die Ortungsdaten von vorausfahrenden Fahrzeugen als Plausibilitätskriterium für die Zuordnung von Standzielen zur linken oder rechten Fahrbahnseite und/oder für die Identifizierung von Störobjekten herangezogen werden.

Weiterhin ist es vorteilhaft, dass die möglichen Fahrbahnrandverläufe und der wahrscheinlichste Fahrbahnrandverlauf durch ein Polynom mit der Form y=a+cx²+... beschrieben werden.

Vorteilhafterweise werden als Stützstellen für die Berechnung des Polynoms jeweils die Koordinaten mindestens eines Standziels benutzt und für das Absoluteglied a des Polynoms ein angenommener oder bekannter Wert für den Abstand des Fahrbahnrandes in Höhe des Fahrzeugs eingesetzt.

Weiterhin ist es vorteilhaft, dass die statistische Auswertung der möglichen Fahrbahnrandverläufe unter Berücksichtigung der jeweiligen Messgenauigkeit erfolgt.

Besonders vorteilhaft ist es, dass zur Bestimmung des Fahrbahnrandverlaufes auch Standziele herangezogen werden, die den Erfassungsbereich des Ortungssystems bereits verlassen haben und deren Positionen anhand der bekannten Fahrzeugbewegung berechnet wird.

Wurde ein stehendes Objekt detektiert, so kann man diese Information als Hinweis nehmen, dass der Straßenverlauf voraussichtlich nicht genau auf dieses stehende Objekt hinzuverläuft. Dies bedeutet, dass jede Krümmung, die vom Fahrzeug ausgehend auf ein stehendes Objekt zuläuft, theoretisch als Straßenverlauf ausscheidet. Da jedes stehende Objekt jedoch aus einer Fehlmessung heraus entstanden sein kann, ist ein völliges Ausscheiden der jeweiligen Fahrbahnkrümmung ein zu hartes Kriterium zur Bestimmung des wahrscheinlichsten Fahrbahnverlaufs. Diese Auswertung wird verbessert, indem man in der bereits vorhandenen Häufigkeitsverteilung jeweils zu Anfang mit einer bestimmten Säulenhöhe startet und für jeden Parabelverlauf, der einen Fahrbahnrandverlauf beschreibt, der auf ein stehendes Objekt zuläuft, den Wahrscheinlichkeitswert, der die Wahrscheinlichkeit der entsprechenden Fahrbahnrandkrümmung beschreibt, um einen bestimmten Zahlenwert vermindert. Hierdurch wird diese Krümmung unwahrscheinlicher als die restlichen.

Weiterhin kann man das Verfahren verbessern, indem man annimmt, dass vorausfahrende Fahrzeuge auf derselben Straße unterwegs sind. Zu jeder Parabelkrümmung, die einen Fahrbahnverlauf beschreibt, die vom eigenen Fahrzeug aus auf ein vorausfahrendes Fahrzeug hinzuläuft, wird in der Häufigkeitsverteilung der Häufigkeitswert einer Parabelkrümmung c um einen vorbestimmten Wert erhöht, also diese Fahrbahnrandkrümmung wahrscheinlicher gemacht als andere. Da nicht bekannt ist, in welcher Fahrspur das vorausfahrende Fahrzeug fährt, sollte die Position des vorausfahrenden Fahrzeugs mit einem Toleranzbereich nach links und rechts als plausibler Straßenverlauf berücksichtigt werden und der sich daraus ergebende Krümmungstoleranzbereich in der Häufigkeitsverteilung erhöht werden.

Von besonderer Bedeutung ist die Realisierung des erfindungsgemäßen Verfahrens in der Form eines Steuerelements, das für ein Steuergerät einen adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

### Zeichnungen

Nachfolgend werden Ausführungsbeispiele der Erfindung anhand von Zeichnungen erläutert. Es zeigen
- Figur 1: ein Diagramm, das die Position eines Fahrzeugs und die Positionen von mit einem Ortungssystem des Fahrzeugs georteten Objekten in einem zweidimensionalen Koordinatensystem angibt, wobei für die jeweiligen Objekte Parabelkrümmungen für mögliche Fahrbahnverläufe eingezeichnet sind,
- Figur 2: ein Wahrscheinlichkeitsdiagramm, in dem die Wahrscheinlichkeit des möglichen Fahrbahnverlaufs über dem Krümmungsradius c einer berechneten Fahrbahnkrümmung aufgezeichnet ist und
- Figur 3: ein Ablaufdiagramm einer Ausführungsform des erfindungsgemäßen Verfahrens.

### Beschreibung von Ausführungsbeispielen

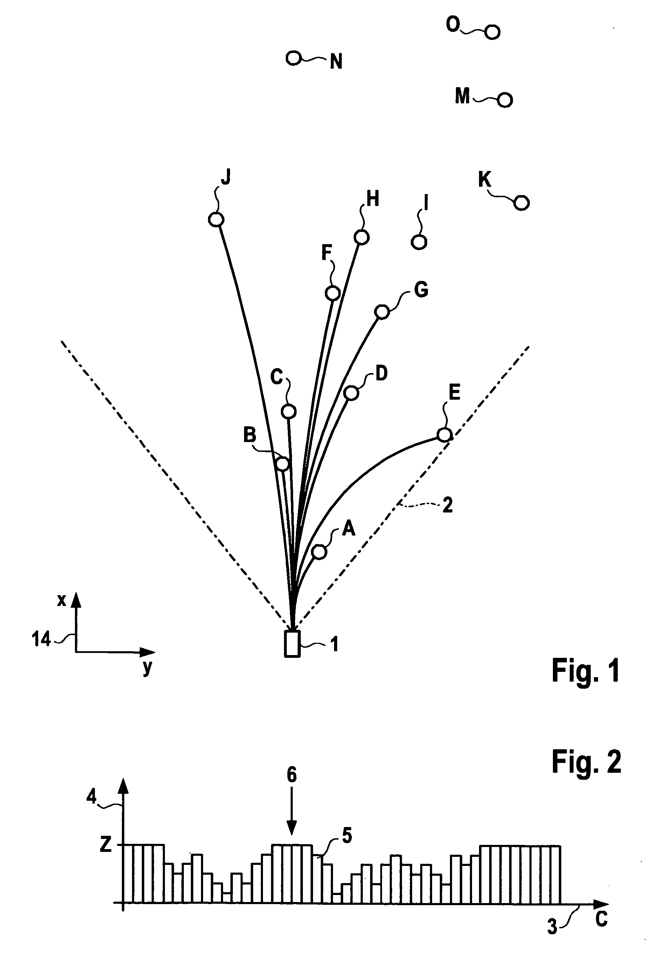

In Figur 1 ist ein Kraftfahrzeug 1 dargestellt, das über ein Ortungssystem verfügt, mittels dem Objekte im vorausbefindlichen Bereich des Fahrzeugs 1 erkannt werden können. Dieses Ortungssystem ist beispielsweise ein System, das mittels Radarstrahlung, Laserstrahlung, Ultraschallwellen oder mittels eines Videosensors mindestens den Abstand und den Azimutwinkel bezüglich des eigenen Fahrzeugs 1 ermittelt und aus diesen Objektdaten eine Längsregelung des Fahrzeugs 1 und gegebenenfalls eine Querregelung des Fahrzeugs 1 durchführt. Mittels des Ortungssystems wurden Objekte A bis O detektiert, deren Lage bezüglich des Fahrzeugs 1 mit Hilfe eines zweidimensionalen Koordinatensystems 14 beschrieben werden können. Durch den Vergleich der Aufenthaltsorte der Objekte A bis O und deren zeitabhängige Veränderung der Position oder infolge eines messbaren Dopplereffektes der Messstrahlung ist es möglich, die Relativgeschwindigkeit der detektierten Objekte A bis O festzustellen und in Verbindung mit der Kenntnis der Geschwindigkeit des Kraftfahrzeugs 1 kann erkannt werden, ob es sich bei den detektierten Objekten um stehende oder bewegte Objekte handelt. Ziel des Verfahrens zur Fahrbahnranddetektion ist es, den Verlauf der Fahrspur zu erkennen, indem festgestellt wird, welches der erkannten Objekte ein Objekt am Fahrbahnrand der Fahrspur ist bzw. welches ein von der Fahrspur weiter entferntes Objekt ist. Bezüglich der Objekte A bis H wurden Parabeln theoretisch möglicher, aber unwahrscheinlicher Fahrbahnverläufe bestimmt, die in Figur 1 eingezeichnet sind. Um festzustellen, welcher Parabelverlauf am wahrscheinlichsten dem tatsächlichen Fahrbahnverlauf entspricht, werden die Krümmungen c der Parabellinien berechnet und einer statistischen Auswertung unterzogen.

Zur Veranschaulichung der statistischen Auswertung ist in Figur 2 ein Diagramm dargestellt, in dem die Wahrscheinlichkeit 4, dass ein berechneter Parabelkrümmungswert c den tatsächlichen Fahrbahnverlauf beschreibt, in Abhängigkeit der Parabellcrümmung c, die auf der Abszisse 3 aufgetragen ist. Zu Beginn der Auswertung wird die Wahrscheinlichkeit für alle Parabelkrümmungen c auf einen vorbestimmten Wert Z gesetzt. Im Verlauf der Detektion und Auswertung der Fahrbahnverläufe wird für jeden Krümmungswert c, in dessen Fahrbahnparabelverlauf ein stehendes Objekt detektiert wurde, um einen vorbestimmten Wert ΔZ vermindert, da es unwahrscheinlich ist, dass im vorberechneten Straßenverlauf, in dem ein stehendes Objekt positioniert ist, der tatsächliche Fahrbahnverlauf liegt. Alternativ wäre es möglich, die Wahrscheinlichkeit für diesen Parabelkrümmungswert c auf 0 zu setzen, jedoch kann das erkannte, stehende Objekt auch ein Störobjekt infolge einer Fehlmessung sein, also eine Detektion stattgefunden haben, obwohl an dieser Stelle kein Objekt vorhanden ist. Daher ist es besser, für mehrfach als stehend erkannte Objekte den Wahrscheinlichkeitswert für jede Detektion zu verringern, so dass Störreflektionen, die das Ergebnis verfälschen können, nur noch einen sehr geringen Einfluss auf das Ergebnis haben. Weiterhin ist es möglich, vorausfahrende, erkannte Objekte innerhalb der Detektionsgrenzen des Ortungssystems zu erfassen und auch für diese, vorherfahrenden Objekte eine Parabel zu berechnen, die einen möglichen Fahrbahnverlauf beschreibt. Da ein vorherfahrendes Fahrzeug ein Fahrzeug ist, das auf derselben Straße unterwegs ist, wie das eigene Fahrzeug 1, wird die Wahrscheinlichkeit für den Parabelwert c um einen vorbestimmten Wert ΔZ' erhöht, in dessen Fahrbahnverlaufsparabel das vorherfahrende Fahrzeug erkannt wurde. Hierzu wird der Wahrscheinlichkeitswert 5 des Krümmungsradius c erhöht, so dass durch Inkrementieren der Wahrscheinlichkeitswerte 5 infolge erkannter, vorausfahrender Fahrzeuge und durch Dekrementierung der Wahrscheinlichkeitswerte 5 infolge erkannter, fahrbahnrandbegrenzender, stehender Objekte ein Wahrscheinlichkeitsprofil in Abhängigkeit des Krümmungsradius c entsteht, das Erhöhungen und Vertiefungen aufweist. Die Wahrscheinlichkeitswerte 6, die die höchste Wahrscheinlichkeit 4 aufweisen, repräsentieren Parabeln mit einer Krümmung c, deren Verlauf am ehesten dem realen, vorausliegenden Fahrbahnverlauf entsprechen.

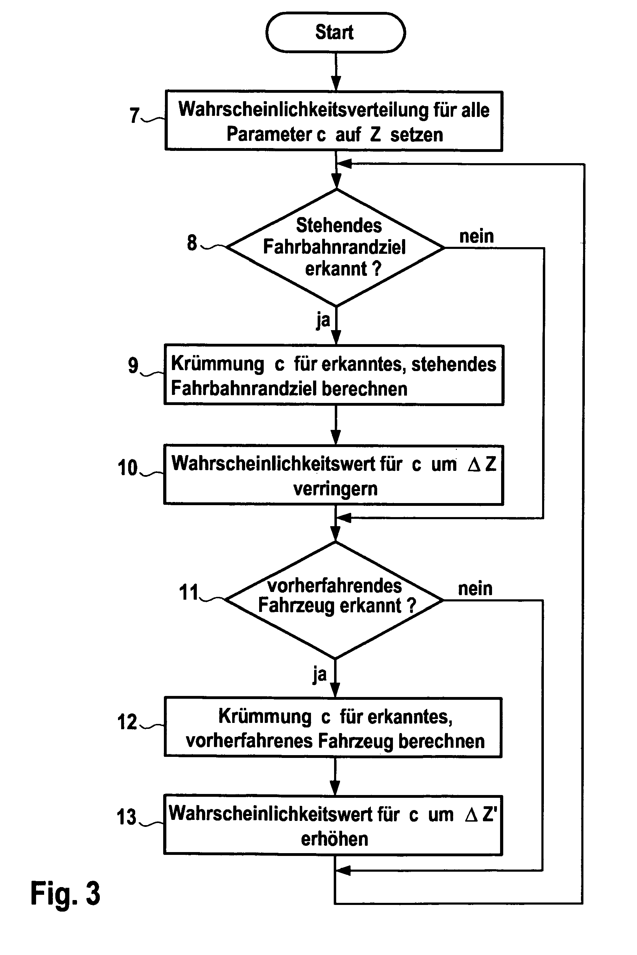

In Figur 3 ist ein Ablaufdiagramm dargestellt, das ein mögliches Vorgehen zur Ermittlung des wahrscheinlichsten Fahrbahnverlaufs darstellt. Nachdem das Ablaufdiagramm bei Start begonnen hat, wird in Schritt 7 die Wahrscheinlichkeitsverteilung für alle Parameter c, die beispielsweise die Fahrbahnkrümmung darstellen, auf einen vorbestimmten Wert Z gesetzt. Im weiteren Verlauf wird in Schritt 8 ermittelt, ob ein stehendes Fahrbahnrandziel mittels des Ortungssystems erkannt wurde. Wurde kein stehendes Fahrbahnrandziel erkannt, so verzweigt das Diagramm in Schritt 8 nach Nein und wird zwischen den Schritten 10 und 11 fortgeführt. Für den Fall, dass in diesem Diagramm die Schritte 11 bis 13 entfallen, würde in diesem Fall das Diagramm in Schritt 8 fortgeführt werden, so dass eine Warteschleife entsteht, bis ein Fahrbahnrandziel erkannt wird. Wurde in Schritt 8 erkannt, dass ein Fahrbahnrandziel vorhanden ist, so wird in Schritt 9 die Krümmung c einer Parabel berechnet, die einen Fahrbahnverlauf repräsentiert, in deren Verlauf das erkannte, stehende Fahrbahnrandziel positioniert ist. Daraufhin wird in Schritt 10 der Wahrscheinlichkeitswert 4 für den in Schritt 9 berechneten Krümmungswert c um einen vorbestimmten Wert ΔZ verringert, da unwahrscheinlich ist, dass im Fahrbahnverlauf ein stehendes Objekt positioniert ist. Alternativ kann das Verfahren nach Schritt 10 zu Schritt 8 verzweigen und geprüft werden, ob ein stehendes Fahrbahnrandziel erkannt wurde, wenn die Wahrscheinlichkeitsverteilung nur in Abhängigkeit der als stehend erkannten Objekte ermittelt werden soll. Weiterhin ist es möglich, das Verfahren nach Schritt 11 fortzuführen, indem geprüft wird, ob ein vorherfahrendes Fahrzeug erkannt wurde. Wurde kein vorherfahrendes Fahrzeug erkannt, so wird das Verfahren mit einem Sprung zu Schritt 8 fortgeführt, indem geprüft wird, ob ein stehendes Fahrbahnrandziel erkannt wurde. Wurde ein vorherfahrendes Fahrzeug erkannt, so wird in Schritt 12 eine Krümmung c einer Parabel berechnet, in deren Verlauf das vorherfahrende Fahrzeug positioniert ist. Die in Schritt 12 ermittelte Krümmung c wird gemäß dem folgenden Schritt 13 in dem Diagramm nach Figur 2 berücksichtigt, indem der Wahrscheinlichkeitswert 4 für die Parabelkrümmung c mit einem Toleranzbereich um einen vorbestimmten Wert ΔZ' erhöht wird, da wahrscheinlich ist, dass das vorherfahrende Fahrzeug auf der gleichen Fahrbahn unterwegs ist wie das eigene Fahrzeug 1. Danach verzweigt das Ablaufdiagramm wieder zu Schritt 1 und es wird geprüft, ob ein stehendes Fahrbahnrandziel erkannt wird. Dieses Verfahren kann beispielsweise solange fortgeführt werden, bis ein Wahrscheinlichkeitsprofil in Abhängigkeit des Krümmungswerts c entstanden ist, bei dem der Spitzenwert des Maximums 6 einen Mindestwahrscheinlichkeitswert überschritten hat. Alternativ ist auch denkbar, dass dieses Verfahren für eine vorbestimmte Zeitdauer durchgeführt wird und danach mit einer neuen Wahrscheinlichkeitsverteilung gemäß Schritt 7 neu begonnen wird. Weiterhin ist es auch denkbar, dass das Verfahren andauernd durchgeführt wird, wobei das entstandene Wahrscheinlichkeitsprofil über der Abszisse verschoben werden muss, da bei einer Fortbewegung des eigenen Fahrzeugs 1 mittels des Objektdetektionssystems erkannte, stehende Objekte am Fahrbahnrand ihren azimutalen Detektionswinkel in Abhängigkeit der Geschwindigkeit des Fahrzeugs und des Fahrzeugkurses verändern, so dass das Wahrscheinlichkeitsprofil ebenfalls derart verschoben werden muss, um die azimutale Winkelveränderung der stehenden Objekte bezüglich der berechneten Parabelkrümmung c berücksichtigen zu können.

## Patentansprüche

1. Verfahren zur Kursprädiktion bei Kraftfahrzeugen, die ein Ortungssystem für vor dem Fahrzeug (10) befindliche Objekte (A - O) aufweisen, bei dem anhand gemessener Abstands- und Winkeldaten für Standziele am Fahrbahnrand eine Funktion berechnet wird, die einen Verlauf einer Fahrspur beschreibt, indem mehrere Standziele identifiziert und verfolgt werden, dass man den Fahrbahnverlauf unter der Annahme, dass diese Standziele am Fahrbahnrand liegen, abschätzt, und dass man anhand einer statistischen Auswertung der Position dieser Standziele den wahrscheinlichsten Fahrbahnverlauf bestimmt, wobei ein Plausibilitätskriterium darin besteht, dass mindestens ein Parameter (c) der Funktionen, die diese Fahrbahnverläufe beschreiben, ein signifikantes Häufigkeitsmaximum bei dem Wert aufweist, der dem wahrscheinlichsten Fahrbahnverlauf entspricht, **dadurch gekennzeichnet, dass** die Häufigkeitsverteilung zu Beginn der Auswertung für alle Parameter (c) einen vorbestimmten Häufigkeitswert (Z) aufweist und die Häufigkeitswerte (5) der Parameter um einen vorbestimmten Zahlenwert (ΔZ) vermindert werden, deren Funktion einen Fahrbahnverlauf beschreibt, auf dem ein Standziel erkannt wurde und dass anhand gemessener Abstands- und Winkeldaten vorausfahrende Fahrzeuge erkannt werden und die Häufigkeitswerte der Parameter (c) um einen vorbestimmten Wert (ΔZ') erhöht werden, deren Funktion einen Fahrbahnverlauf beschreibt, der vom eigenen Fahrzeug auf ein vorherfahrendes Fahrzeug zuläuft.

2. Verfahren nach Anspruch 1, **dadurch gekennzeichnet, daß** die Ortungsdaten von vorausfahrenden Fahrzeugen (24, 26) als Plausibilitätskriterium für die Zuordnung von Standzielen zur linken oder rechten Fahrbahnseite und/oder für die Identifizierung von Störobjekten herangezogen werden.

3. Verfahren nach einem der Ansprüche 1 oder 2, **dadurch gekennzeichnet, daß** die möglichen Fahrbahnverfäufe und der wahrscheinlichste Fahrbahnverlauf durch Polynome der Form y = a + cx² + ... beschrieben werden.

4. Verfahren nach Anspruch 3, **dadurch gekennzeichnet, daß** als Stützstelle für die Berechnung des Polynoms jeweils die Koordinaten mindestens eines Standziels benutzt werden und daß für das absolute Glied a des Polynoms ein angenommener oder bekannter Wert für den Abstand des Fahrbahnrandes in Höhe des Fahrzeugs (10) eingesetzt wird.

5. Verfahren nach einem der vorhergehenden Ansprüche, **dadurch gekennzeichnet, daß** die statistische Auswertung der möglichen Fahrbahnverläufe unter Berücksichtigung der jeweiligen Messgenauigkeit erfolgt.

6. Verfahren nach einem der vorstehenden Ansprüche, **dadurch gekennzeichnet, daß** zur Bestimmung des Fahrbahnverlaufes auch Standziele herangezogen werden, die den Erfassungsbereich des Ortungssystems bereits verlassen haben und deren Positionen anhand der bekannten Fahrzeugbewegung berechnet werden.

7. Vorrichtung zur Kursprädiktion in Kraftfahrzeugen, mit einem Ortungssystem für vor dem Fahrzeug (10) befindliche Objekte (A - O) und einem Datenverarbeitungssystem zur Berechnung des Verlaufes der Fahrbahn, mit Mittel die zur Durchführung des Verfahrens nach einem der vorstehenden Ansprüche ausgebildet sind.

## Claims

1. Method for predicting the course in motor vehicles which have a locating system for objects (A-O) located in front of the vehicle (10), in which a function which describes a course of a lane is calculated on the basis of measured distance data and angle data for locations at the edge of the carriageway by virtue of the fact that a plurality of locations are identified and tracked, in that the course of the carriageway is estimated assuming that these locations are located at the edge of the carriageway, and in that the most probable course of the carriageway is determined on the basis of a statistical evaluation of the position of these locations, wherein a plausibility criterion consists in the fact that at least one parameter (c) of the functions which describe these courses of the carriageway has a significant frequency maximum at the value which corresponds to the most probable course of the carriageway, **characterized in that** the frequency distribution at the start of the evaluation for all the parameters (c) has a predetermined frequency value (Z), and the frequency values (5) of the parameters are reduced by a predetermined numerical value (ΔZ), the function of which describes a course of the carriageway on which a location has been detected, and **in that** vehicles travelling ahead are detected on the basis of measured distance data and angle data, and the frequency values of the parameters (c) are increased by a predetermined value (ΔZ'), the function of which describes a course of the carriageway which extends from the driver's own vehicle to a vehicle travelling behind.

2. Method according to Claim 1, **characterized in that** the locating data from vehicles (24, 26) travelling ahead are used as a plausibility criterion for the assignment of locations to the left-hand or right-hand side of the carriageway and/or for the identification of disruptive objects.

3. Method according to one of Claims 1 or 2, **characterized in that** the possible courses of the carriageway and the most probable course of the carriageway are described by polynomials of the form y=a+cx²+ ....

4. Method according to Claim 3, **characterized in that** in each case the coordinates for at least one location are used as a reference point for the calculation of the polynomial, and **in that** an assumed or known value for the distance of the edge of the carriageway at the level of the vehicle (10) is used for the absolute element a of the polynomial.

5. Method according to one of the preceding claims, **characterized in that** the statistical evaluation of the possible courses of the carriageway is carried out taking into account the respective measuring accuracy.

6. Method according to one of the preceding claims, **characterized in that** in order to determine the course of the carriageway locations are also used which have already exited the detection range of the locating system and whose positions are calculated on the basis of the known movement of the vehicle.

7. Apparatus for predicting the course in motor vehicles, having a locating system for objects (A-O) located in front of the vehicle (10) and a data processing system for calculating the course of the carriageway, having means which are designed to carry out the method according to one of the preceding claims.

## Revendications

1. Procédé de prédiction de la trajectoire sur des véhicules automobiles qui présentent un système de localisation pour les objets (A - O) qui se trouvent devant le véhicule (10), selon lequel une fonction est calculée au moyen des données de distance et d'angle mesurées relatives à des cibles fixes sur le bord de la chaussée, laquelle décrit un tracé d'une voie de circulation en identifiant et en suivant plusieurs cibles fixes, de sorte que le tracé de la chaussée soit estimé en supposant que ces cibles fixes se trouvent sur le bord de la chaussée, et de sorte que le tracé le plus probable de la chaussée soit déterminé au moyen d'une analyse statistique de la position de ces cibles fixes, un critère de plausibilité consistant en ce qu'au moins un paramètre (c) des fonctions qui décrivent ces tracés de la chaussée présente une fréquence maximale significative avec la valeur qui correspond au tracé le plus probable de la chaussée, **caractérisé en ce que** la distribution des fréquences présente au début de l'analyse une valeur du fréquence (Z) prédéterminée pour tous les paramètres (c) et les valeurs de fréquence (5) des paramètres sont réduites d'une valeur numérique prédéfinie (ΔZ) dont la fonction décrit un tracé de la chaussée sur lequel une cible fixe a été détectée et **en ce que** les véhicules qui précèdent sont détectés au moyen des données de distance et d'angle mesurées et les valeurs de fréquence des paramètres (c) sont augmentées d'une valeur prédéfinie (ΔZ') dont la fonction décrit un tracé de la chaussée qui s'étend du véhicule propre vers un véhicule qui précède.

2. Procédé selon la revendication 1, **caractérisé en ce que** les données de localisation des véhicules qui précèdent (24, 26) sont utilisées en tant que critère de plausibilité pour l'affectation de cibles fixes au côté gauche ou droit de la chaussée et/ou pour l'identification des objets perturbateurs.

3. Procédé selon l'une des revendications 1 ou 2, **caractérisé en ce que** les tracés possibles de la chaussée et le tracé le plus probable de la chaussée sont décrits par des polynômes de la forme y = a + cx² + ...

4. Procédé selon la revendication 3, **caractérisé en ce que** les coordonnées d'au moins une cible fixe sont à chaque fois utilisées comme point de référence pour le calcul du polynôme et **en ce qu'**une valeur supposée ou connue de la distance du bord de la chaussée à hauteur du véhicule (10) est utilisée pour le membre absolu a du polynôme.

5. Procédé selon l'une des revendications précédentes, **caractérisé en ce que** l'analyse statistique des tracés possibles de la chaussée s'effectue en tenant compte de la précision de mesure correspondante.

6. Procédé selon l'une des revendications précédentes, **caractérisé en ce que** des cibles fixes qui sont déjà sorties de la zone de détection du système de localisation et dont les positions sont calculées au moyen du mouvement connu du véhicule sont également utilisées pour déterminer le tracé de la chaussée.

7. Dispositif de prédiction de la trajectoire dans des véhicules automobiles, comprenant un système de localisation pour les objets (A - O) qui se trouvent devant le véhicule (10) et un système de traitement de données pour calculer le tracé de la chaussée, comprenant des moyens qui sont configurés pour mettre en oeuvre le procédé selon l'une des revendications précédentes.
